# EUROPEAN PATENT APPLICATION

(11) **EP 2 628 923 A1**
(43) Date of publication of application: **21.08.2013**
(21) Application number: 11832357.5
(22) Date of filing: 01.09.2011
(51) Int. Cl.: F02D 21/08, F02D 41/12, F02M 25/07

(54) **EXHAUST GAS RECIRCULATION CONTROL DEVICE FOR INTERNAL COMBUSTION ENGINE**

(30) Priority: 15.10.2010 JP 2010232865
(71) Applicant: Nissan Motor Co., Ltd, Yokohama-shi, Kanagawa 221-0023 (JP)
(72) Inventor: YOSHIKAWA, Shunichi, Kanagawa 243-0123 (JP); KAWASAKI, Takao, Kanagawa 243-0123 (JP)
(74) Representative: Hager, Thomas Johannes
(86) International application number: PCT/JP2011/069914
(87) International publication number: WO 2012/049916

(57) **Abstract**

In a predetermined EGR region, an exhaust gas recirculation control device performs control to recirculate a portion of exhaust gas of an internal combustion engine (1) to a suction passage (11) through an EGR passage (31) in which an EGR valve (32) is provided. If it is detected that a fuel cut recovery condition is satisfied after a fuel cut condition is satisfied, the EGR valve (32) is closed from when the fuel cut recovery condition is satisfied until fuel gas is detected in an exhaust gas passage (21) that leads from a combustion chamber (16) to an inlet (31 a) of the EGR passage (31).

## Description

### TECHNICLA FIELD

The present invention relates to an exhaust gas recirculation control device for an internal combustion engine.

### BACKGROUND ART

In an internal combustion engine equipped with the exhaust gas recirculation system (hereinafter, also referred to as EGR), when a fuel cut condition is satisfied in the EGR region, the EGR gas that is circulated back to the intake system from the exhaust system of an internal combustion engine gradually flows out from the exhaust system to the outside during the fuel cut period. Therefore, when a fuel cut recovery condition is satisfied after the fuel cut, the amount of EGR gas is too small to be controlled easily with respect to an intake gas.

Thus, for a predetermined period after the fuel cut recovery, a control on the ignition timing is conventionally made without relying on the EGR amount for the combustion at EGR gas shortage. More specifically switching to such as a diffusion combustion by fuel injection near the compression top dead center or advancing of fuel injection timing with low EGR, premixed combustion injection are proposed (see Patent Document 1, paragraphs [0009] to [0017]).

### PRIOR ART DOCUMENTS

PATENT DOCUMENT 1: Japanese Laid-Open Patent Publication No. 2005-325811

### SUMMARY OF THE INVENTION

### PROBLEMS THAT THE INVENTION IS TO SOLVE

However, when control is made to switch the form of combustion irrespective of the amount of EGR gas as in the prior art described above, since the air that can not be measured by an air flow meter flows into the combustion chamber, special correction is required in order to stabilize the combustion, which may adversely affect fuel economy and drivability.

The present invention has an object of suppressing the degradation of reduced fuel consumption and driving at the time of recovery after the fuel cut.

### MECHANISM FOR SOLVING THE PROBLEM

### EFFECT OF THE INVENTION

According to the present invention, at the recovery after fuel cut, the recirculation of EGR gas will be inhibited until the combustion gas reaches the inlet of EGR passage.
The above object is achieved by recalculating the EGR gas in accordance with the EGR conditions after the combustion gas has reached an inlet of EGR passage.

According to the present invention, since the combustion is controlled without recirculation of EGR gas until the combustion gas will reach the inlet of EGR passage so that a correction to stabilize the combustion will be unnecessary with the result that deterioration in fuel economy or drivability may be suppressed.

### BRIEF DESCRIPTION OF THE DRAWINGS

FIG. 1 is a block diagram showing an internal combustion engine system to which one embodiment of the present invention is applied.
FIG. 2 is a graph showing an example of operating conditions in which the exhaust gas recirculation mechanism operates in FIG. 1.
FIG. 3 is a flow chart showing an example of the exhaust gas recirculation control device pertaining to one embodiment according to the present invention.
FIG. 4 is a timing chart showing an example of exhaust gas recirculation control device pertaining to the embodiment according to the present invention.
FIG. 5 is a diagram schematically showing a main part of the exhaust gas recirculation mechanism of FIG. 1.

### CONFIGURATION FOR CARRYING OUT THE INVENTION

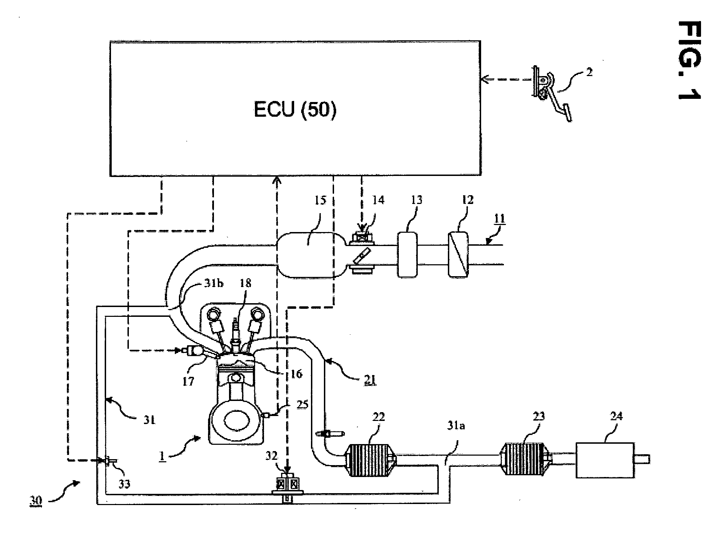

In the following, description will be made of an embodiment according to the present invention with reference to the accompanying drawings. FIG. 1 is a block diagram showing an internal combustion engine system to which the embodiment of the present invention is applied. In an intake passage 11 is provided an air filter 12, an air flow meter 13 for detecting an intake air flow rate, a throttle valve for controlling the air flow rate, and a collector 15.

The throttle valve 14 is provided with a throttle sensor for detecting opening of the throttle valve 14 and a throttle valve controlling device for controlling the opening of the throttle valve 14 by an actuator such as DC motor and the like. The throttle valve controlling device electronically controls the opening of throttle valve 14 based on the driving signal from control unit 50 in order to achieve the required torque calculated in accordance with the driver's operation amount of the accelerator pedal 2, for example.

Disposed in the combustion chamber 16 of each cylinder of the internal combustion engine 1, a fuel injection valve 17 is provided. The fuel injection valve 17 is driven to open by a driving pulse signal, and the fuel supplied under pressure by a fuel pump (not shown) is controlled to a predetermined pressure by a pressure regulator (not shown) to inject directly or indirectly into combustion chamber 16. Although detailed explanation is made below, control to interrupt to inject fuel from fuel injector 17 is executed when the control unit 50 confirms a predetermined condition (also referred to a fuel cut condition).

An ignition plug 18 is mounted by disposing combustion chamber 16 of each cylinder, and ignition of intake air-fuel mixture is carried out based on the ignition signal from control unit 50.

On the other hand, in the exhaust passage 21, exhaust purification catalysts 22, 23 for purifying exhaust gas are provided. A three-way catalyst that may oxidize carbon monoxide CO and hydrocarbons HC while reducing nitrogen oxides compounds NOx in the exhaust gas in the vicinity of stoichiometric (theoretical air-fuel ratio, λ = 1, air / fuel = 14.7 by weight), or an oxidation catalyst to perform the oxidation of carbon monoxide CO and hydrocarbons HC may be used.

In FIG. 1, 24 denotes a muffler and 25 denotes a crank angle sensor 25 provided on the crankshaft of the internal combustion engine 1. In addition, by counting a crank unit angle signals output from crank angle sensor 25 in synchronization with engine rotation over a predetermined time, or by measuring the period of the crank reference angle signal, the control unit 50 may detect an engine rotation speed Ne.

The internal combustion engine 1 in the present embodiment is provided with an exhaust gas recirculation mechanism 30 that circulates (or recirculates) the exhaust gas at the downstream of exhaust gas purifying catalyst 22 to the downstream of air flow meter 13 thus recirculating the exhaust gas under in predetermined operating conditions.

The exhaust gas recirculation mechanism 30 is provided with an EGR passage 31, one end of which presents an inlet 31 a and is connected to the exhaust passage 21 at downstream of exhaust gas purifying catalyst 22 while the other end of which presents an outlet 31 b and is connected to intake passage 11 at the downstream of air flow meter 13.

The EGR passage 31 is provided with an EGR valve 32 to selectively open and close for regulating a flow rate of exhaust gas that is reticulated, and a temperature sensor to detect an exhaust gas temperature of recalculating gas in the EGR passage 31 to send to control unit 50. EGR valve 32 is controlled in its opening/cl0sing operation by a control signal from control unit 50.

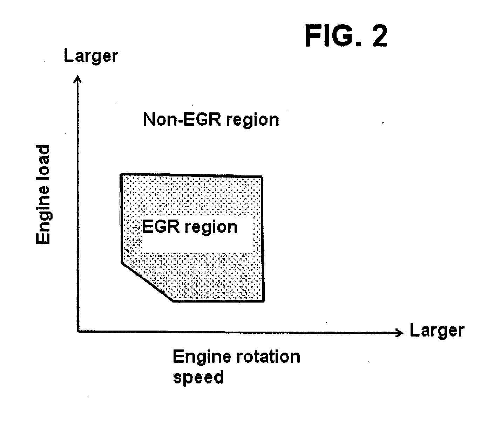

FIG. 2 shows an example of the operating conditions to operate the exhaust gas recirculation mechanism 30. In the illustrated embodiment, in an EGR range in which engine speed and engine load are within a predetermined range respectively, exhaust gas recirculation mechanism 30 is operated to recalculate exhaust gas flowing in exhaust passage 21 to intake passage 11. Outside of this region, the operation of exhaust gas recirculation mechanism 30 stops. Note that the setting of both the EGR region and no-EGR region shown in FIG. 2 is merely an example and may be appropriately adjusted in accordance with the specifications etc. of internal combustion engine 1.

Control unit 50 consisting of a microprocessor is provided with CPU, ROM, RAM, A / D converter and input/output interface and the like, and controls an opening of throttle valve based on the load requirement from accelerator pedal 2 and various sensors provided with internal combustion system, fuel injection amount by driving fuel injector 17, and ignite a spark plug 18 at the ignition timing set.

Further, in order to reduce the fuel consumption during vehicle travel, control unit 50 performs a fuel cut to cut off the fuel injection from the fuel injection valve 17 when the fuel cut condition is satisfied, and subsequently performs a fuel cut recovery to resume fuel injection from the fuel injection valve 17 if the condition is satisfied.

The fuel cut conditions include, but are not limited to, a condition in which the accelerator pedal 2 is OFF (i.e., depression amount is zero) and engine speed is a predetermined value or more, for example. In addition, the recovery conditions from the fuel cut being executed is a condition in which either accelerator pedal is ON (i.e., depression amount is more than zero) or acceleration pedal is OFF with engine rotation speed being less than a predetermined value.

Now that fuel cut described above has been performed during the vehicle travel, since no fuel will be supplied to combustion chamber 16, the air (i.e. fresh air) introduced from intake passage 11will be discharged as such. Then, when a recovery is made from the fuel cut operation, although the combustion within combustion chamber 16 will be resumed, a portion of air that has been flowing through the exhaust passage 21 will be recirculated into intake passage 11 via EGR passage 31 so that that portion of air will be mixed with the an air introduced via air flow meter 13 to lead to combustion chamber 16.

Because the combustion control in combustion chamber 16 is also performed based on the intake air amount detected by air flow meter 13 and the EGR rate according to the opening degree of the EGR valve 32, if the gas recirculated from EGR passage 31 immediately after the fuel cut recovery contains air (fresh air), the actual amount of air introduced into combustion chamber 16 is not measurable by air flow meter 13 and the combustion control may thus be unstable.

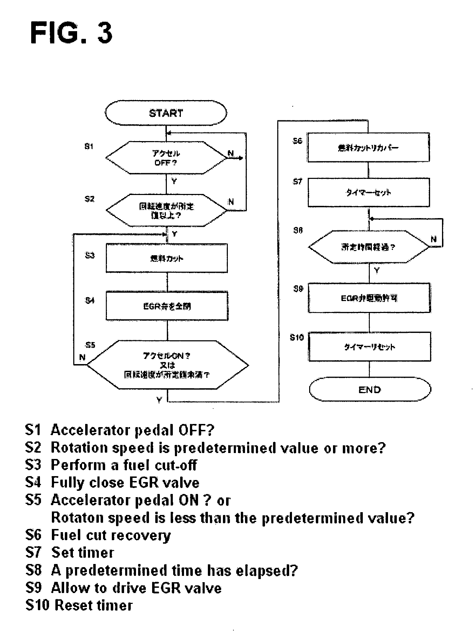

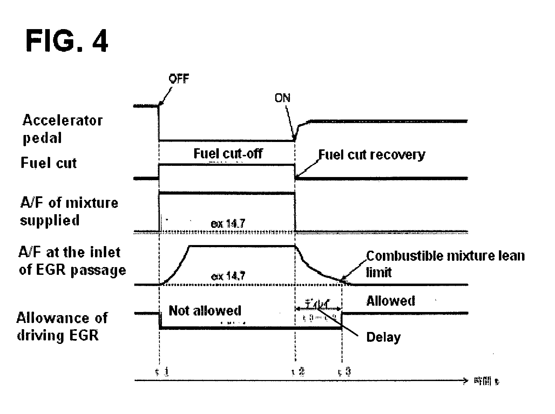

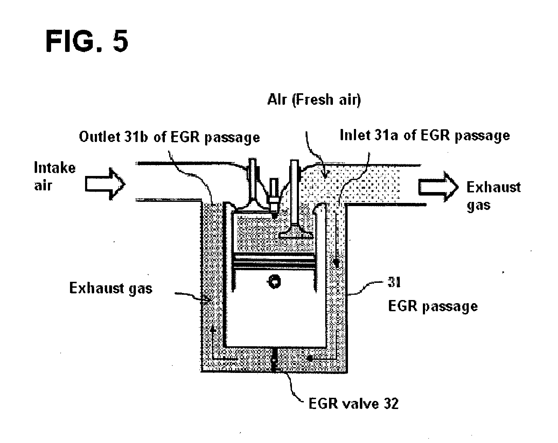

In this embodiment, therefore, the following control will be performed. An example of the EGR control is described with reference to FIGS. 3 to 5, where a fuel cut recovery is conducted after a fuel cut operation has been carried out during vehicle travel. FIG. 3 is a flow chart showing a control routine of the EGR valve executed by control unit 50 during a fuel cut recovery period, FIG. 4 is a corresponding timing chart, and FIG. 5 is a diagram schematically showing a main part of the exhaust gas recirculation mechanism 30 of FIG. 1.

First, it is assumed that both the engine load of internal combustion engine 1 and engine rotation speed are positioned within the EGR region shown in FIG. 2. In this state, a determination is made whether or not accelerator pedal 2 is OFF and the engine rotation speed is at a predetermined value or more (steps S1, S2 in FIG. 3). When the accelerator pedal 2 is being depressed or the engine rotation speed is less than the predetermined value, control returns to step S1 for repetitive execution of this determination.

When accelerator pedal 2 is OFF and engine rotation speed is at the predetermined value or more, control proceeds to step S3, where a fuel cut operation is carried out to interrupt or inhibit the fuel injection from fuel injection valve 17. At the same time, EGR valve 32 is fully closed to inhibit the recirculation of exhaust gas from the inlet 31 a of EGR passage 31 into EGR passage 31. As shown in FIG. 4, at time t1, when fuel is cut off, the air to fuel ration A/F supplied to combustion chamber 16 increases from 14. 7 (stoichiometric), and at time later than the time t1, the air to fuel ratio A/F at the inlet 31 a of EGR passage 31 gradually increases.

Control proceeds to step S5 in FIG. 3 while performing a fuel cut operation as well as full closure of EGR valve 32, to determine the existence or absence of the recovery condition from fuel cut-off. Specifically, a determination is made whether or not accelerator pedal 2 is ON (i.e., depressed), or the accelerator pedal 2 is OFF yet with engine rotation speed being less than the above described predetermined value.

The control proceeds to step S6, when accelerator pedal 2 is ON (i.e., depressed), or when even if the accelerator pedal 2 is OFF, engine rotation speed falls below the above described predetermined value, to resume or restart the fuel injection by fuel injection valve 17 thus performing a recovery from fuel cut. Accordingly, an appropriate amount of fuel is supplied to combustion chamber 16 depending on the request from the accelerator pedal 2 or depending on the idling operation. At time t2 in FIG. 4 when fuel cut is recovered from fuel cut-off by depression of accelerator pedal 2, the air to fuel ratio A/F decreases to return to 14.7 (i.e. stoichiometric). Consequently, at the time later than time t2 in the figure, the air to fuel ratio A/F gradually decreases at the inlet 31 a of EGR passage 31.

At this point in time t2, although in both combustion chamber 16 and exhaust passage 21, as shown in FIG. 5, air (i.e., fresh air) has been filled due to the fuel cut operation thus far, since EGR valve 32 is fully closed at the same time as the start of the fuel cut in step S4 in FIG. 3, the fresh air within the exhaust passage 21 may be prevented from intruding to fill the entire exhaust passage 31 through the inlet 31a of the EGR passage 31.

At the same time with the process in step S6, a timer incorporated in control unit 50 will be set in step S7. Counting the timer is performed in step S8, and it is determined whether or not a predetermined time has elapsed. The predetermined time set here (i.e., a delay or lag until drive permission of EGR valve 32) is represented by "t3-t2" in FIG. 4, where time t3 indicates a time at which the air to fuel ratio A/F at the inlet 31 a of EGR passage 31 reaches a lean limit mixture ratio. In other words, the time t3 presents such a timing at which, even if exhaust gas is re-circulated to intake passage 11 from inlet 31a of EGR passage 31 through EGR passage 31, an air and fuel mixture supplied to combustion chamber 16 may be combustible to ensure a smooth combustion control. At the timing at which the degree of lean gas in exhaust passage 21 is such that, even if the gas in the exhaust passage 21 would be mixed with a mixture of air and fuel supplied to combustion chamber 16, an overall air-fuel ratio A / F does not exceed a combustible air to fuel ratio A/F (i.e., not too lean) without deterioration of the combustion stability and emissions, a recirculation will be allowed. It should be noted that, strictly speaking, this predetermined time is relevant or associated with the number of cycles after the fuel cut recovery and a volume of exhaust gas in EGR passage 31 between combustion chamber 16 and inlet 31 a of the EGR passage 31, and considering that the volume of exhaust gas is previously known (i.e., constant), the relationship between the predetermined time and the number of cycles may be mapped in advance by experiment or a calculation.

Control is permitted to proceed to step S9 to allow to drive the EGR valve 32 that has been held fully closed until then to allow the recirculation of the exhaust gas at the EGR rate in accordance with the operation conditions when the predetermined time has elapsed in Step S8. In step S10, the timer in control unit 50 is reset and the process waits for the next control.

As described above, when a recovery control of fuel cut is performed after executing the fuel cut control, although both the combustion chamber 16 and exhaust passage 21 are filled with air (i.e. fresh air) at that time t2, since EGR valve 32 will be fully closed at the same time with starting of fuel cut operation, (see step S4, FIG. 3), the fresh air in the exhaust passage 21 will be inhibited from being recirculated into intake passage 11 through EGR passage 31. Thus, the combustion in the combustion chamber 16.may be stabilized.

Further, when the predetermined time in step S8 in FIG. 3 has elapsed, as shown in FIG. 4 after the time t3, the air to fuel ratio, A / F at inlet 31 a of the EGR passage 31 will pass the lean limit of the combustible mixing ratio, and gradually approaches a predetermined value (14.7 in the example shown). Therefore, if this gas is to be recirculated to the intake passage 11 through the EGR passage 31, combustion control can be executed smoothly.

The above described control unit 50 corresponds to the fuel cut detection means, recovery detection means, combustion gas detection means, and control means according to the present invention.

### DESCRIPTION OF REFERENCE SIGNS

- 1: Internal combustion engine
- 11: Intake passage
- 12: Air filter
- 13: Air flow meter
- 14: Throttle valve
- 15: Collector
- 16: Combustion chamber
- 17: Fuel injection valve.
- 21: Exhaust passage
- 22, 23: Exhaust gas purifying catalyst
- 24: Muffler
- 30: Exhaust gas recirculation mechanism
- 31: EGR passage
- 31a: Inlet of the EGR passage
- 31b: Outlet of the EGR passage
- 32: EGR valve
- 33: Temperature sensor
- 2: Accelerator pedal
- 50: Control unit

## Claims

1. A exhaust gas recirculation control device for performing a control to recirculate in a predetermined EGR region a portion of exhaust gas of an internal combustion engine to an intake passage through an EGR passage provided with an EGR valve, comprising:
a fuel cut detection means to detect the existence or absence of a fuel cut condition:
a fuel recovery detection means to detect the existence or absence of a recovery condition from the fuel cut:
a combustion gas detection means to detect whether or not the combustion gas from the internal combustion engine is present in an exhaust passage between an combustion chamber of the internal combustion engine and an inlet of the EGR passage; and
a control means for controlling to close the EGR valve, when the fuel recovery detection means detects that the existence of the recovery condition after the fuel cut detection means has detected the existence of the fuel cut condition, from the timing of the existence of the recovery condition to the timing at which the combustion gas is detected by the combustion gas detection means to be present in the exhaust passage between the combustion chamber and the inlet.

2. The exhaust gas recirculation control device as claimed in claim 1, wherein
the control means performs a control to close the EGR valve upon the fuel cut detection means having detected the existence of the fuel cut condition.

3. The exhaust gas recirculation control device as claimed in either claim 1 or 2, wherein
the control means is configure to control to allow the driving of the EGR valve when the combustion gas detection means detects that the combustion gas is present within the exhaust passage between the combustion chamber and the inlet.

4. The exhaust gas recirculation control device as claimed in any one of claims 1 to 3, wherein
the combustion gas detection means detects whether or not the combustion gas is present in the exhaust passage between the combustion chamber and the inlet in accordance with the time elapsed from the detection of the existence of the recovery condition from the fuel cut.
